# DEMANDE DE BREVET EUROPEEN

(11) **EP 1 289 039 A2**
(43) Date de publication de la demande: **05.03.2003**
(21) Numéro de dépôt: 02292038.3
(22) Date de dépôt: 14.08.2002
(51) Int. Cl.: H01M 8/04, F01P 3/22, B60K 11/02

(54) **Système de refroidissement à éjecteur pour véhicule électrique**

(30) Priorité: 03.09.2001 FR 0111384
(71) Demandeur: Renault s.a.s., 92100 Boulogne Billancourt (FR)
(72) Inventeur: Olivier, Gérard, 78380 Bougival (FR); Oulefki, Abdelhakim, 93300 Aubervilliers (FR)

(57) **Abrégé**

Système de refroidissement pour un véhicule automobile à propulsion électrique équipé d'un dispositif de pile à combustible 1 caractérisé par le fait qu'il comprend un organe éjecteur 2 monté dans un circuit de vapeur 3 alimenté par la pile à combustible 1 et au moins un appareil évaporateur 5 monté dans un circuit de fluide de refroidissement 6 dans lequel se refroidit la phase liquide du fluide de refroidissement, après avoir traversé la pile à combustible, l'organe éjecteur aspirant en outre de la vapeur formée dans l'appareil évaporateur et fournissant de la vapeur mélangée à au moins un condenseur 10 relié à la pile à combustible par une canalisation de retour de liquide.

## Description

La présente invention a pour objet un système de refroidissement particulièrement adapté à un véhicule automobile à propulsion électrique équipé d'un dispositif de pile à combustible.

Les piles à combustible qui permettent la combustion directe de l'énergie libre d'une réaction chimique d'oxydo-réduction en énergie électrique, apparaissent comme une technologie prometteuse dans le domaine de l'automobile pour répondre aux exigences de réduction de la pollution et de la consommation. Les piles à combustible utilisant des membranes échangeuses de protons semblent particulièrement adaptées pour cette application car elles acceptent l'utilisation d'un combustible et fonctionnent à des températures entre 20 et 150°C.

L'utilisation de ces piles à combustible pour alimenter en courant électrique un dispositif de propulsion de véhicule automobile présente cependant des difficultés tenant notamment aux exigences de refroidissement plus complexes que dans le cas d'un véhicule équipé d'un moteur à combustion interne. En effet, la puissance thermique à évacuer est environ double de celle d'un véhicule équipé d'un moteur à combustion interne. De plus, les niveaux de température des organes à refroidir sont hétérogènes, certains organes n'admettant pas des températures supérieures à 55°C alors que d'autres peuvent être portés à 120°C et même à plusieurs centaines de degrés Celsius, dans le cas du reformeur par exemple.

L'utilisation de systèmes de refroidissement de type classique comprenant des compresseurs, pompes, etc., dans des circuits de fluide de refroidissement, entraîne une nouvelle consommation d'énergie électrique. L'adjonction de ces organes supplémentaires amène en outre inévitablement une surchauffe du module de puissance comprenant la pile à combustible, le réformeur et l'ensemble des organes auxiliaires, du fait de leur propre consommation. De plus, l'intégration dans le véhicule automobile de tels organes supplémentaires de refroidissement présente des difficultés en raison de leur encombrement.

La présente invention a donc pour objet un système de refroidissement particulièrement adapté à un véhicule automobile à propulsion électrique, ne nécessitant qu'une faible consommation d'énergie et de nature à diminuer de ce fait la consommation, le bruit et l'entretien.

L'invention a également pour objet un système de refroidissement qui puisse non seulement refroidir la pile à combustible et ses organes auxiliaires, mais puisse également être utilisé pour la climatisation de l'habitacle du véhicule, qu'il s'agisse d'un refroidissement ou d'un chauffage de celui-ci.

Dans un mode de réalisation, le système de refroidissement selon l'invention, adapté à un véhicule automobile à propulsion électrique équipé d'un dispositif de pile à combustible, comprend un organe éjecteur monté dans un circuit de vapeur alimenté par la pile à combustible et au moins un appareil évaporateur monté dans un circuit de fluide de refroidissement dans lequel se refroidit la phase liquide du fluide de refroidissement, après avoir traversé la pile à combustible. L'organe éjecteur est monté de façon à aspirer en outre de la vapeur formée dans l'appareil évaporateur et à fournir de la vapeur mélangée à au moins un condenseur relié à la pile à combustible par une canalisation de retour de liquide.

L'utilisation d'un tel éjecteur en remplacement du compresseur généralement prévu dans un circuit de refroidissement pour pile à combustible permet l'obtention d'un coût réduit, d'un fonctionnement silencieux sans vibrations et d'une réduction de la consommation et de l'émission de polluants. De plus, le fonctionnement d'un tel éjecteur est simple et fiable et les frais de maintenance et de réparations sont réduits.

La sortie du condenseur peut également être reliée à l'appareil évaporateur par une canalisation de retour de liquide de refroidissement, avec interposition d'un dispositif détendeur.

Dans un mode de réalisation avantageux, une canalisation de dérivation comportant une électrovanne peut mettre en communication la sortie de l'éjecteur avec un appareil de climatisation de l'habitacle du véhicule et/ou avec une pluralité d'organes auxiliaires du véhicule et de ses moyens de propulsion, en vue d'un chauffage par condensation de vapeur dérivée provenant de l'éjecteur.

De cette manière, le système de refroidissement de la pile à combustible intègre non seulement la fonction de refroidissement et d'humidification de la pile mais également la fonction de refroidissement des organes auxiliaires et des moyens de propulsion tels que le moteur électrique, les batteries et l'électronique de puissance ainsi que la fonction de climatisation de l'habitacle du véhicule.

De préférence, la pile à combustible est reliée à l'appareil évaporateur par une canalisation de retour de la phase liquide du fluide de refroidissemnt, comportant un dispositif détendeur, une partie du liquide refoidi dans l'appareil évaporateur pouvant être amenée sur l'appareil de climatisation de l'habitacle du véhicule et/ou sur les organes auxiliaires du véhicule et de ses moyens de propulsion, en vue d'un refroidissement par ledit liquide qui revient ensuite dans l'appareil évaporateur.

Dans un autre mode de réalisation, le circuit de vapeur comprend un moyen de surchauffage de la vapeur provenant de la pile à combustible avant qu'elle alimente l'éjecteur, le moyen de surchauffage comportant un échangeur de chaleur et /ou un organe chaud faisant partie des moyens de propulsion, tel qu'un reformeur.

Un compresseur d'appoint peut être associé à l'éjecteur, soit à l'entrée, soit à la sortie de celui-ci, afin d'augmenter la quantité de vapeur traversant l'éjecteur.

Un radiateur supplémentaire peut être monté en parallèle du circuit de fluide de refroidissement.

Dans une variante du système de refroidissement selon l'invention, une canalisation en dérivation peut relier directement la pile à combustible à un condenseur d'un appareil de climatisation de l'habitacle du véhicule en vue du chauffage de l'habitacle par une partie de la vapeur produite dans la pile à combustible.

Une partie du liquide condensé dans le condenseur est amenée sur un évaporateur de l'appareil de climatisation de l'habitacle du véhicule et/ou sur les organes auxiliaires du véhicule et de ses moyens de propulsion, en vue d'un refroidissement par ledit liquide, la vapeur produite étant aspirée par l'éjecteur.

Un circuit supplémentaire comprenant un condenseur supplémentaire peut être prévu afin de refroidir une partie du fluide gazeux ou diphasique issu de la pile à combustible.

Un éjecteur supplémentaire peut être monté en dérivation du circuit supplémentaire et aspirer une partie du fluide gazeux sortant de l'éjecteur principal.

L'invention sera mieux comprise à la description détaillée de deux modes de réalisation pris à titre d'exemples nullement limitatifs et illustrés par les dessins annexés, sur lesquels :
- la figure 1 illustre schématiquement les principaux éléments d'un premier mode de réalisation du système de refroidissement selon l'invention; et
- la figure 2 illustre schématiquement les principaux éléments d'un deuxième mode de réalisation du système selon l'invention.

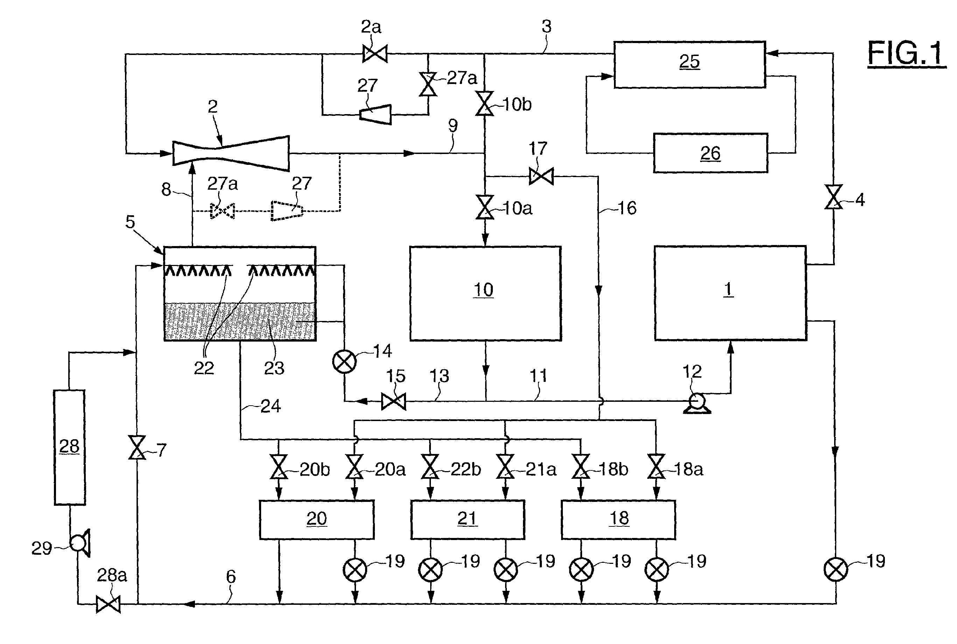

Tel qu'il est illustré sur la figure 1, le système de refroidissement est destiné à équiper un dispositif de pile à combustible référencé 1 dans son ensemble. Le système de refroidissement comprend un organe éjecteur 2 monté dans un circuit de vapeur 3 alimenté par la pile à combustible 1, la régulation du débit pouvant se faire par l'intermédiaire d'une électrovanne 4 montée à la sortie de la pile à combustible 1. Un appareil évaporateur 5 est monté quant à lui dans un circuit de fluide de refroidissement 6, dans lequel se refroidit la phase liquide du fluide de refroidissement issue de la pile à combustible 1. Le débit du liquide dans ce circuit peut être régulé par une électrovanne 7 placée en amont de l'évaporateur 5.

L'organe éjecteur 2 est relié à une canalisation d'aspiration 8, dans laquelle de la vapeur formée dans l'appareil évaporateur 5 est aspirée dans l'éjecteur 2 et mélangée avec la vapeur provenant de la pile à combustible 1 par le circuit de vapeur 3. La vapeur mélangée issue de l'éjecteur 2 est amenée par la canalisation 9 à un condenseur 10. La canalisation de retour de liquide 11 relie la sortie du condenseur 10 à la pile à combustible 1, la mise en circulation du liquide dans la canalisation de retour 11 se faisant par une pompe de circulation 12.

Dans le mode de réalisation illustré sur la figure 1, la sortie du condenseur 10 peut en outre être reliée par la canalisation 13 comportant un dispositif détendeur 14 à l'appareil évaporateur 5, le débit dans cette canalisation de retour 13 étant régulé par une électrovanne 15.

Une canalisation de dérivation 16 comportant une électrovanne 17 peut en outre, lorsque ladite électrovanne 17 est ouverte, mettre en communication la sortie de l'éjecteur 2 avec un appareil de climatisation 18 de l'habitacle du véhicule, lequel peut en outre être isolé par une électrovanne 18a. De la même manière, la canalisation de dérivation 16 peut être connectée à différents organes auxiliaires dont deux, référencés 20 et 21, ont été représentés sur la figure 1, chacun pouvant être isolé par une électrovanne 20a, 21a.

La vapeur provenant de l'éjecteur 2, véhiculée par la canalisation de dérivation 16, peut se condenser dans l'appareil de climatisation 18 et produire la chaleur nécessaire pour chauffer l'habitacle du véhicule. De la même manière, la vapeur véhiculée par la canalisation de dérivation 16 alimentant les organes auxiliaires 20 et 21 est capable de procéder à un chauffage de ceux-ci lorsque cela est nécessaire.

Des dispositifs détendeurs 19 sont prévus, sur la sortie de la phase liquide de la pile à combustible 1 et en sortie de l'appareil de climatisation 18 comme des organes auxiliaires 20 et 21 sur le trajet de retour du liquide via le circuit de fluide de refroidissement 6 avant d'être amenés à nouveau dans l'évaporateur 5.

Dans l'évaporateur 5, peuvent être prévues comme illustré sur la figure 1, des rampes de ruissellement 22 de façon à favoriser la formation d'une phase liquide 23. Le liquide 23 refroidi dans l'évaporateur 5, peut être amené par la canalisation 24 sur l'appareil de climatisation 18 et les organes auxiliaires 20 et 21 lorsque les électrovannes correspondantes 18b, 20b et 21b sont ouvertes. Le retour du liquide de refroidissement en sortie de l'appareil de climatisation 18 et des organes auxiliaires 20 et 21 se fait également en direction à nouveau de l'évaporateur 5 par le circuit de fluide de refroidissement 6.

Dans le mode de réalisation illustré sur la figure 1, se trouve en outre monté un échangeur de chaleur 25 disposé dans le circuit de vapeur 3 à la sortie de la pile à combustible 1. L'échangeur de chaleur 25 est associé à un organe chaud du véhicule qu'il convient de refroidir, par exemple le réformeur 26 destiné à alimenter la pile à combustible 1. On obtient ainsi un surchauffage de la vapeur provenant de la pile à combustible 1 avant qu'elle alimente l'éjecteur 2.

Un compresseur d'appoint 27 a également été illustré à titre d'exemple sur la figure 1 et peut être isolé par l'électrovanne 27a. Le compresseur d'appoint 27 est associé à l'éjecteur 2 et permet à celui-ci d'aspirer plus de vapeur en provenance de l'évaporateur 5, et donc d'augmenter le rendement du système de refroidissement. En variante, le compresseur 27 pourrait être disposé en parallèle de l'éjecteur 2, comme représenté sur la figure 1 en pointillés.

On a également représenté sur la figure 1, à titre d'exemple, un radiateur supplémentaire 28 monté en parallèle du circuit de fluide de refroidissement 6 et pouvant être isolé par une électrovanne 28a, le liquide étant mis en circulation par une pompe 29.

On va maintenant décrire le fonctionnement du système de refroidissement tel qu'il est illustré sur la figure 1 dans différentes étapes de sa mise en oeuvre.

En phase de roulage stabilisé du véhicule, c'est-à-dire un certain temps après le démarrage, le fonctionnement du système est le suivant :

La phase gazeuse du fluide ou un mélange diphasique provenant de la pile à combustible 1, est envoyé vers l'éjecteur 2 via l'électrovanne 4, en passant par le circuit de vapeur 3. L'éjecteur 2 aspire de la vapeur du liquide de refroidissement en provenance de l'évaporateur 5 qui joue également le rôle d'un séparateur de phase liquide/vapeur. A la sortie de l'éjecteur 2, le flux de vapeur peut être subdivisé en deux parties qui ne sont pas nécessairement égales. Une partie, véhiculée par la canalisation 9 et l'électrovanne 10a va se condenser dans le condenseur 10. Le fluide de refroidissement sort du condenseur 10 à l'état liquide et la pompe de circulation 12 renvoie ce liquide vers la pile à combustible 1. Une partie de ce liquide peut aussi être ramenée à l'évaporateur 5 après avoir été détendue par le détendeur 14 et ce, lorsque l'électrovanne 15 est ouverte. On opèrera en partie de cette manière lorsque l'on constate un manque de liquide dans l'évaporateur 5.

Une autre partie du flux de vapeur sortant de l'éjecteur 2 peut être dirigée vers l'appareil de climatisation 18 afin de se condenser et de produire de la chaleur pour chauffer l'habitacle. Dans ce cas, l'électrovanne 18a est ouverte, tandis que l'électrovanne 18b est fermée. De la même manière, si les organes auxiliaires 20 et 21 doivent être chauffés, les électrovannes 20a et 21a sont ouvertes, tandis que les électrovannes 20b et 21b sont fermées. Dans le cas où l'habitacle du véhicule ne doit pas être chauffé et où aucun des organes auxiliaires 20 et 21 ne doivent être réchauffés, ce qui est généralement le cas en fonctionnement de roulage stabilisé, on procède à la fermeture de l'électrovanne 17.

La phase liquide du fluide de refroidissement issue de la pile à combustible 1, est amenée à l'évaporateur 5 après avoir été détendue si nécessaire par un détendeur 19. Une partie de ce liquide s'évapore dans l'évaporateur 5, la phase liquide restante se refroidissant. Cette phase liquide peut alors être envoyée dans l'appareil de climatisation 18 ou dans les organes auxiliaires 20 et 21 afin de les refroidir. Dans ce cas, les électrovannes correspondantes 18b, 20b, 21b sont ouvertes, tandis que les électrovannes 18a, 20a et 21a sont fermées.

Si la température du liquide de refroidissement provenant de l'évaporateur 5 est suffisamment basse, la climatisation par refroidissement de l'habitacle peut ainsi être obtenue par l'appareil de climatisation 18. Si la température du liquide à la sortie de l'évaporateur 5 n'est pas suffisamment basse, l'appareil de climatisation 18, qui peut comprendre un évaporateur d'une boucle de climatisation indépendante à compression de vapeur, non représenté sur la figure, permettrait alors d'assurer un rafraîchissement suffisant de l'habitacle. De la même manière, l'appareil de climatisation 18 pourraît être conçu comme un condenseur de façon à chauffer l'habitacle au moyen d'une boucle de climatisation à compression de vapeur supplémentaire, non illustrée sur la figure, et en complément du système de l'invention.

On notera que les différents détendeurs 14, 19, représentés sur la figure 1, pourraient ne pas être nécessaires à froid lorsque le niveau de température du liquide qui les traverse n'est pas suffisant. Dans ce cas, il est possible de prévoir des liaisons by-pass munies d'électrovannes commandées afin de court-circuiter les détendeurs.

On notera également que l'appareil de climatisation, au même titre que le condenseur 10, pourraient être munis de ventilateurs permettant une augmentation de leur efficacité.

Il est possible, en phase de roulage stabilisé, que le refroidissement de la pile à combustible et des différents organes auxiliaires 20, 21, puisse être assuré par une simple circulation classique du liquide de refroidissement grâce au radiateur optionnel 28. Dans ce cas, le liquide issu de la pile à combustible peut circuler dans deux boucles. La première boucle de circulation permet de refroidir la pile à combustible: le liquide issu de la pile à combustible 1 passe par l'électrovanne 28a, étant mis en circulation par la pompe 29, traverse le radiateur 28 avant de pénétrer l'évaporateur 5 agissant comme un réservoir, puis revient par l'électrovanne 15 sous l'action de la pompe de circulation 12 et retourne dans la pile à combustible 1. La seconde boucle permet de refroidir les organes auxiliaires 20 et 21, et d'assurer éventuellement un chauffage de l'habitacle du véhicule. Dans cette seconde boucle, le liquide provenant de l'évaporateur 5 traverse les organes auxiliaires 20 et 21 ainsi qu'éventuellement l'appareil de climatisation 18. Le liquide traverse ensuite l'électrovanne 28a, est mis en circulation par la pompe 29, traverse le radiateur 28 avant de revenir sur l'évaporateur 5. On notera que les organes 20 et 21 peuvent ainsi être convenablement refroidis malgré d'éventuelles consignes de température à ne pas dépasser, relativement basses.

Tous les différents organes auxiliaires incluant par exemple les batteries du véhicule, le moteur électrique, l'électronique de puisssance, etc., peuvent être refroidis comme il a été indiqué précédemment. Ces organes peuvent être montés en parallèle comme illustré sur la figure 1 ou en série.

Lors d'un démarrage à froid par temps froid, le système de l'invention illustré sur la figure 1 fonctionne de la manière suivante. Lors de cette phase, plusieurs organes doivent pouvoir être réchauffés afin de réduire leur temps de montée en température. La pile à combustible 1 envoie le liquide de refroidissement directement vers l'évaporateur 5, le liquide revenant à la pile à combustible par l'électrovanne 15 et les canalisations 13 et 11. Le liquide est mis en circulation par la pompe 12. Dans ce cas, l'évaporateur 5 joue le rôle de réservoir de transition du liquide. La circulation du liquide se fait ici dans la canalisation 13 dans le sens inverse de la flèche montrée sur la figure 1.

L'électrovanne 4 est ouverte et les électrovannes 10a, 2a et 27a sont fermées. La totalité de la phase gazeuse du fluide de refroidissement provenant de la pile à combustible 1 transite alors par les électrovannes 4 et 10b qui sont ouvertes, puis par l'électrovanne 17 également ouverte, afin d'alimenter l'appareil de climatisation 18 à travers l'électrovanne 18a. L'appareil de climatisation 18 joue alors le rôle d'un condenseur et permet le chauffage de l'habitacle du véhicule. Si la vapeur produite par la pile à combustible 1 n'est pas à une température suffisante, l'électrovanne 4 est fermée et le chauffage de l'habitacle du véhicule pourrait être assuré par d'autres moyens non représentés sur la figure.

Les électrovannes 20b et 21b peuvent être ouvertes afin de permettre un préchauffage des organes auxiliaires 20 et 21. Les électrovannes 20a et 21a sont fermées. L'éléctrovanne 18b peut éventuellement être ouverte afin de chauffer l'habitacle, si la circulation du liquide provenant de l'évaporateur 5 au cours de cette phase est capable d'assurer un meilleur chauffage que la vapeur provenant de la pile à combustible 1. Des capteurs de température, non représentés sur la figure, peuvent être prévus afin de gérer le choix d'ouverture des électrovannes 18a et 18b.

Lors d'un démarrage à froid du véhicule par temps chaud, le fonctionnement du dispositif de l'invention est le suivant :

Certains organes du véhicule ont besoin d'être réchauffés afin d'être portés à leur température de fonctionnement, le plus rapidement possible, et l'habitacle peut avoir besoin d'un refroidissement.

Les organes auxiliaires 20 et 21 peuvent être préchauffés comme indiqué précédemment dans le cas d'un démarrage à froid par temps froid. L'éléctrovanne 18b est ouverte si le liquide de refroidissement provenant de l'évaporateur 5 est suffisamment froid pour rafraîchir l'habitacle. Dans le cas contraire, l'électrovanne 18b est fermée et le refroidissement du véhicule peut éventuellement être assuré au moyen d'une boucle complémentaire de climatisation à compression de vapeur, non illustrée sur la figure.

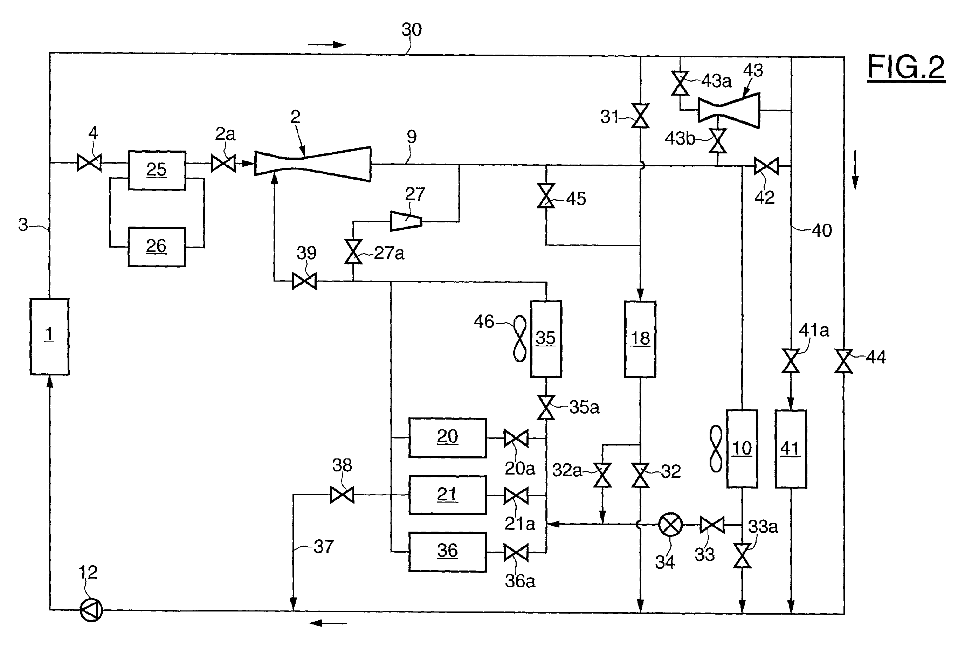

Dans le mode de réalisation illustré sur la figure 2, où les organes identiques portent les mêmes références, une canalisation en dérivation 30 sur le circuit de vapeur 3 relie directement la sortie de la pile à combustible 1 au condenseur de l'appareil de climatisation 18 de l'habitacle du véhicule avec interposition d'une électrovanne 31 à l'entrée et d'une électrovanne 32 à la sortie.

De plus, une partie du liquide condensé dans le condenseur 10 peut être amenée à traverser l'électrovanne 33 et le détendeur 34, de façon à être amenée sur un évaporateur 35 de l'appareil de climatisation du véhicule par une électrovanne d'entrée 35a, ainsi que sur les organes auxiliaires 20, 21 et 36 par des électrovannes d'entrée 20a, 21a et 36a, le retour de la phase liquide pouvant s'effectuer par la canalisation 37 et l'électrovanne 38, tandis que la vapeur produite dans l'évaporateur 35 et subsistant en sortie des organes 20, 21 et 36, peut être aspirée par l'éjecteur 2 au travers de l'électrovanne 39.

Un circuit supplémentaire 40 comprend un condenseur supplémentaire 41 pouvant être isolé par une électrovanne 41a. Le condenseur supplémentaire 41 permet de refroidir une partie de la vapeur provenant de l'éjecteur 2 lorsque l'électrovanne 42 est ouverte, ainsi que la vapeur ou le mélange diphasique provenant de la pile à combustible 1.

Un éjecteur supplémentaire 43 qui peut être isolé par deux électrovannes 43a et 43b, est en outre monté en dérivation du circuit supplémentaire 40, de façon à pouvoir aspirer une partie du fluide gazeux sortant de l'éjecteur principal 2 et ce, à travers l'électrovanne 43b.

Le système de refroidissement illustré sur la figure 2 fonctionne de la manière suivante, en cas de roulage en phase stabilisée. Au cours de cette phase, la pile à combustible 1 comme les organes auxiliaires 20, 21 et 36, doivent être refroidis. L'éléctrovanne 44 est fermée. Le fluide quittant la pile à combustible 1 par le circuit de vapeur 3 se trouve à l'état gazeux ou diphasique. Une partie de ce fluide traverse l'électrovanne 41a pour être condensée dans le condenseur 41, avant de retourner via la pompe de circulation 12 dans la pile à combustible 1, où il s'évapore au moins partiellement à nouveau. Une partie du fluide gazeux ou diphasique peut également traverser l'électrovanne 31 pour se condenser ou se refroidir dans l'organe 18 qui peut être l'aérotherme servant au chauffage de l'habitacle par temps froid. Par temps chaud, il est possible de rejeter les calories de l'organe 18 vers l'extérieur au moyen d'un dispositif approprié non représenté sur la figure. L'électrovanne 32 est ouverte, tandis que l'électrovanne 32a est fermée. Le fluide condensé provenant de l'organe 18 retourne donc directement vers la pile à combustible 1 après avoir traversé la pompe de circulation 12.

Une autre partie du fluide à l'état gazeux ou diphasique sortant de la pile à combustible 1, traverse l'électrovanne 2a montée en amont de l'éjecteur 2. Le fluide traverse ensuite l'éjecteur. La vapeur produite est mélangée en sortie de l'éjecteur 2 et condense ensuite ou se refroidit dans le condenseur 10. Les électrovannes 35a, 20a, 21a et 36a sont ouvertes. Une fois condensée ou refroidie dans le condenseur 10, une partie du liquide traversant l'électrovanne 33, est détendue dans le détendeur 34 et est amenée sur l'organe 35 et les organes auxiliaires 20, 21 et 36, où le liquide subit une évaporation. Une autre partie du liquide condensé traverse l'électrovanne 33a pour retourner dans la pile à combustible 1 via la pompe de circulation 12. Lors de cette phase de fonctionnement, l'électrovanne 38 est fermée, tandis que l'électrovanne 39 est ouverte, permettant ainsi l'aspiration de la vapeur par l'éjecteur 2. Les électrovannes 33 et 33a sont commandées de façon à s'adapter aux besoins.

En phase de démarrage à froid par temps froid, le système de refroidissement illustré sur la figure 2 fonctionne de la manière suivante. Dans ce cas, tous les organes ont besoin d'être portés à leur température de meilleure rendement et l'habitacle a besoin d'être réchauffé. Une partie du fluide de refroidissement quittant la pile à combustible 1 y retourne directement via l'électrovanne 44 qui est alors ouverte. Une autre partie passe par l'électrovanne 31 pour alimenter l'aérotherme 18 servant à chauffer l'habitacle. Les électrovannes 2a, 42 et 41a sont fermées, de sorte que l'éjecteur 2 n'est pas actif. Les électrovannes 20a, 24 la et 36a sont au contraire ouvertes. Les électrovannes 32, 27a, 39 et 35a sont maintenues fermées. Le fluide traverse les organes 20, 21 et 36 et retourne vers la pile à combustible via l'électrovanne 38 qui est ouverte.

Dans ces conditions, le fluide suit deux boucles de circulation : la première boucle en provenance de la pile à combustible 1 passe par l'électrovanne 44 et la pompe de circulation 12 avant de revenir à la pile à combustible 1. La deuxième boucle en provenance de la pile à combustible 1 traverse l'électrovanne 31, l'organe 18, l'électrovanne 32a, puis les différents organes auxiliaires 20, 21 et 36, le liquide revenant par l'électrovanne 38 sur la pompe de circulation 12 avant de retourner à la pile à combustible 1. Si l'aérotherme 18 ne suffit pas à produire la chaleur suffisante pour l'habitacle, il est possible de recourir à une boucle supplémentaire de climatisation et compression de vapeur, non illustrée sur la figure.

En cas de démarrage à froid par temps chaud, 1e système de refroidissement illustré sur la figure 2 fonctionne de la façon suivante. Le fluide de refroidissement quittant la pile à combustible 1 retourne en partie directement vers la pile 1 par l'électrovanne 44, afin de raccourcir le temps de montée en température de la pile.

L'éjecteur 2 ne pouvant pas recevoir de vapeur sous pression en provenance de la pile 1 en phase de démarrage, le compresseur auxiliaire 27 peut être mis en marche si l'on souhaite privilégier le besoin de climatisation de l'habitacle du véhicule. Le compresseur 27 refoule le fluide à haute pression vers le condenseur 10, d'où le fluide ressort à l'état liquide. Les électrovannes 45, 33a et 42 sont fermées. Le détendeur 34 permet de détendre le liquide sortant du condenseur 10, l'électrovanne 33 étant ouverte alors que l'électrovanne 33a est fermée. Le fluide passe alors dans l'évaporateur du dispositif de climatisation d'habitacle 35, l'électrovanne 35a étant ouverte alors que les électrovannes 20a, 21a et 36a sont fermées. L'habitacle du véhicule peut ainsi être climatisé dès le démarrage.

On note deux boucles de circulation indépendantes : une première boucle de climatisation à compression de vapeur comprend le compresseur 27, le condenseur 10, le détendeur 34 et l'évaporateur 35. Cette boucle permet de climatiser l'habitacle du véhicule. La deuxième boucle de circulation est une boucle fermée par laquelle le fluide issu de la pile à combustible 1 et passant par l'électrovanne 44 revient à la pile 1 par la pompe de circulation 12 afin de préchauffer la pile à combustible.

Si l'on souhaite au contraire privilégier le préchauffage des organes auxiliaires 20, 21, 36, la circulation des fluides est identique à celle d'un démarrage à froid par temps chaud précédemment mentionné. Dans ce cas, cependant, l'aérotherme 18 n'est pas soumis à une circulation d'air.

On peut également envisager de préchauffer la pile à combustible 1 et les organes auxiliaires 20, 21 et 36, tout en climatisant l'habitacle par refroidissement. A cet effet, on procède au préchauffage de la pile à combustible 1 et des organes auxiliaires 20, 21 et 36, comme dans le cas d'un démarrage à froid par temps chaud. On fait également fonctionner le compresseur 27. De plus, à la sortie du détendeur 34, le fluide est directement envoyé vers l'évaporateur 35 par une dérivation non illustrée sur la figure 2. La boucle de climatisation de l'habitacle du véhicule comprend donc le compresseur 27, le détendeur 34, l'évaporateur 35. Ainsi, le fluide issu du détendeur 34 ne se mélange pas à celui provenant de l'électrovanne 32a.

Dans le système de refroidissement illustré sur la figure 2, on peut envisager d'ajouter un séparateur de phase en amont de l'éjecteur 2 de façon à éviter le passage de la phase liquide dans l'éjecteur. De plus, un dispositif de contrôle de débit peut être ajouté en amont de l'éjecteur, de façon à réguler la quantité de vapeur envoyée dans l'éjecteur et ainsi la pression régnant dans le condenseur 10 ainsi que le débit traversant les organes 20, 21, 36 et 35.

Comme illustré sur la figure 2, on peut envisager de monter en amont de l'éjecteur un échangeur thermique 25 coopérant avec une source chaude 26, qui peut être par exemple le réformeur destiné à alimenter la pile à combustible 1. On obtient ainsi, comme précédemment décrit, un effet de surchauffage de la vapeur et donc une amélioration des capacités d'aspiration de l'éjecteur 2. L'échangeur thermique 25 pourrait d'ailleurs être monté immédiatement en sortie de la pile à combustible 1 au lieu d'être placé à l'entrée de l'éjecteur 2, comme illustré sur la figure 2.

On notera que l'électrovanne 42, montée entre les deux condenseurs 10 et 41, peut s'ouvrir lorsque l'un de ces condenseurs est insuffisant pour condenser la totalité du fluide qu'il traverse. Dans ce cas, une partie de la vapeur peut passer d'un condenseur vers l'autre.

L'électrovanne 45 permet à l'aérotherme 18 de fonctionner en condenseur. Dans le cas où les condenseurs 10 et 41 sont insuffisants pour assurer la condensation totale de la vapeur, on procède à l'ouverture de l'électrovanne 45. L'organe 18 fonctionnant alors en condenseur, envoie ses calories vers l'habitacle du véhicule, s'il y a besoin de chauffer cet habitacle, ou vers l'extérieur dans le cas contraire, par exemple au moyen d'un volet dirigeant le flux d'air vers l'extérieur.

L'aérotherme 18 ainsi que l'évaporateur d'habitacle 35, peuvent être munis du même ventilateur 46 ou au contraire de deux ventilateurs séparés qui peuvent être logés dans le même boîtier ou dans deux boîtiers séparés.

On comprendra que les différentes électrovannes utilisées dans les systèmes de refroidissement illustrés sur les figures, peuvent être pilotées en fonction des besoins par un dispositif de commande approprié.

## Revendications

1. Système de refroidissement pour un véhicule automobile à propulsion électrique équipé d'un dispositif de pile à combustible **caractérisé par le fait qu'**il comprend un organe éjecteur (2) monté dans un circuit de vapeur (3) alimenté par la pile à combustible(1) et au moins un appareil évaporateur (5) monté dans un circuit de fluide de refroidissement dans lequel se refroidit la phase liquide du fluide de refroidissement, après avoir traversé la pile à combustible, l'organe éjecteur aspirant en outre de la vapeur formée dans l'appareil évaporateur et fournissant de la vapeur mélangée à au moins un condenseur (10) relié à la pile à combustible par une canalisation (11) de retour de liquide.

2. Système de refroidissement selon la revendication 1 **caractérisé par le fait que** la sortie du condenseur (10) est également reliée à l'appareil évaporateur par une canalisation (13) de retour de liquide de refroidissement, avec interposition d'un dispositif détendeur (14).

3. Système de refroidissement selon l'une des revendications 1 ou 2 **caractérisé par le fait qu'**une canalisation de dérivation (16) comportant une électrovanne (17) peut mettre en communication la sortie de l'éjecteur (2) avec un appareil (18) de climatisation de l'habitacle du véhicule et/ou avec une pluralité d'organes auxiliaires (20, 21) du véhicule et de ses moyens de propulsion, en vue d'un chauffage par condensation de vapeur dérivée provenant de l'éjecteur.

4. Système de refroidissement selon l'une quelconque des revendications précédentes **caractérisé par le fait que** la pile à combustible est reliée à l'appareil évaporateur (5) par une canalisation (6) de retour de la phase liquide du fluide de refroidissement, comportant un dispositif détendeur (19), une partie du liquide refoidi dans l'appareil évaporateur pouvant être amenée sur un appareil (18) de climatisation de l'habitacle du véhicule et/ou sur une pluralité d'organes auxiliaires (20, 21) du véhicule et de ses moyens de propulsion, en vue d'un refroidissement par ledit liquide qui revient ensuite dans l'appareil évaporateur.

5. Système de refroidissement selon l'une quelconque des revendications précédentes **caractérisé par le fait que** le circuit de vapeur comprend un moyen de surchauffage de la vapeur provenant de la pile à combustible avant qu'elle alimente l'éjecteur, le moyen de surchauffage comportant un échangeur de chaleur (25) et /ou un organe chaud (26) faisant partie des moyens de propulsion, tel qu'un reformeur.

6. Système de refroidissement selon l'une quelconque des revendications précédentes **caractérisé par le fait qu'**un compresseur d'appoint (27) est associé à l'éjecteur (2), soit à l'entrée, soit à la sortie de celui-ci, afin d'augmenter la quantité de vapeur traversant l'éjecteur.

7. Système de refroidissement selon l'une quelconque des revendications précédentes **caractérisé par le fait qu'**un radiateur supplémentaire (28) est monté en parallèle du circuit de fluide de refroidissement.

8. Système de refroidissement selon l'une quelconque des revendications précédentes **caractérisé par le fait qu'**une canalisation en dérivation (30) peut relier directement la pile à combustible à un condenseur (18) d'un appareil de climatisation de l'habitacle du véhicule en vue du chauffage de l'habitacle par une partie de la vapeur produite dans la pile à combustible.

9. Système de refroidissement selon l'une quelconque des revendications précédentes **caractérisé par le fait qu'**une partie du liquide condensé dans le condenseur (10) est amenée sur un évaporateur (35) d'un appareil de climatisation de l'habitacle du véhicule et/ou sur une pluralité d'organes auxiliaires (20,21,36) du véhicule et de ses moyens de propulsion, en vue d'un refroidissement par ledit liquide, la vapeur produite étant aspirée par l'éjecteur (2).

10. Système de refroidissement selon l'une quelconque des revendications précédentes **caractérisé par le fait qu'**un circuit supplémentaire (40) comprenant un condenseur supplémentaire (41) permet de refroidir une partie du mélange diphasique issu de la pile à combustible.

11. Système de refroidissement selon la revendication 10 **caractérisé par le fait qu'**un éjecteur supplémentaire (43) est monté en dérivation du circuit supplémentaire (40) et aspire une partie du fluide gazeux sortant de l'éjecteur principal.
